# EUROPEAN PATENT SPECIFICATION

(11) **EP 3 020 529 B1**
(45) Date of publication and mention of the grant of the patent: **13.03.2019**
(21) Application number: 15191150.0
(22) Date of filing: 23.10.2015
(51) Int. Cl.: B29C 45/17, B29C 45/16, B29C 45/76

(54) **INJECTION MOLDING MACHINE**
SPRITZGIESSMASCHINE
MACHINE DE MOULAGE A INJECTION

(30) Priority: 11.11.2014 JP 2014229147
(43) Date of publication of application: 18.05.2016
(73) Proprietor: SUMITOMO HEAVY INDUSTRIES, LTD., Tokyo 141-6025 (JP)
(72) Inventor: SUZUKI, Motofumi, Chiba, 263-0001 (JP)
(74) Representative: Louis Pöhlau Lohrentz

(56) References cited:
- GALLATI P ET AL: "2C - AN IMPORTANT TREND FOR THE FUTURE IN MODERN INJECTION MOULDING", INTERNET CITATION, April 1997 (1997-04), XP002081709, Retrieved from the Internet: URL:HTTP://WWW.NETSTAT.COM/EN/NETSTALNEWS3 1/CONTENTS [retrieved on 1998-09-17]
- "Selogica - the control unit for all ALLROUNDER injection moulding machines", 20020501, 1 May 2002 (2002-05-01), pages 1-31, XP002305034,

## Description

### BACKGROUND OF THE INVENTION

### Field of the Invention

The present invention relates to an injection molding machine.

### Description of Related Art

Injection molding machines include an operation unit that receives an input operation; a display unit that displays a setting screen for molding conditions; and a control unit that makes the display unit display the setting screen according to the input operation of the operation unit (for example, refer to Japanese Unexamined Patent Application Publication No. 2008-114403) .

Moreover, an injection molding machine is known that comprises two plasticizing units for processes of over-molding, bi-injection, or co-injection, wherein said units can be programmed separately (cf. GALLATI P. et al.: "2C - AN IMPORTANT TREND FOR THE FUTURE IN MODERN INJECTION MOULDING", HTTP://WWW.NETSTAT.COM/EN/NETSTALNEWS31/CONTENTS, April 1997).

A graphics-based sequence editor is further known that allows for programming different injection molding machines via the same interface (cf. "Selogica - the control unit for all ALLROUNDER injection moulding machines", pages 1-31, 1 May 2002) .

### SUMMARY OF THE INVENTION

The injection molding machines may integrate a plurality of parts while molding these parts in order, thereby molding a molding product. In this case, the setting screen includes setting columns to which set values used for molding are input for every part (NB: the term "column" is used here and in the following synonymous to the terms "cell" or "field").

In the related art, the input operability of the setting screen was bad such that erroneous input occurs or substantial time is taken when an operator inputs a set value to each setting column.

The invention has been made in view of the above problems, and a main object thereof is to provide an injection molding machine that can improve the input operability of a setting screen.

In order to solve the above problems, according to an aspect of the invention, there is provided an injection molding machine that integrates a plurality of parts while molding the plurality of parts in order, thereby molding a molding product. The injection molding machine includes an operation unit that receives an input operation; a display unit that displays a setting screen for molding conditions; and a control unit that makes the display unit display the setting screen according to the input operation of the operation unit. The setting screen includes setting columns to which set values used for molding respective parts are input. The control unit makes a set value
input to a setting column for molding one part be displayed on at least one of setting columns for molding the remaining parts.

According to the aspect of the invention, the injection molding machine that can improve the input operability of a setting screen is provided.

### BRIEF DESCRIPTION OF THE DRAWINGS

Fig. 1 is a view illustrating primary molding using a first movable mold attached to an injection molding machine according to an embodiment of the invention.
Fig. 2 is a view illustrating secondary molding using the first movable mold attached to the injection molding machine according to the embodiment of the invention.
Fig. 3 is a view illustrating third molding using the first movable mold attached to the injection molding machine according to the embodiment of the invention.
FIG. 4 is a view illustrating a setting screen of the injection molding machine according to the embodiment of the invention.

### DETAILED DESCRIPTION OF THE INVENTION

Although an embodiment for carrying out the invention will be described below with reference to the drawings, in the respective drawings, the same or corresponding components will be designated by the same or corresponding reference numerals, and the description thereof will be omitted.

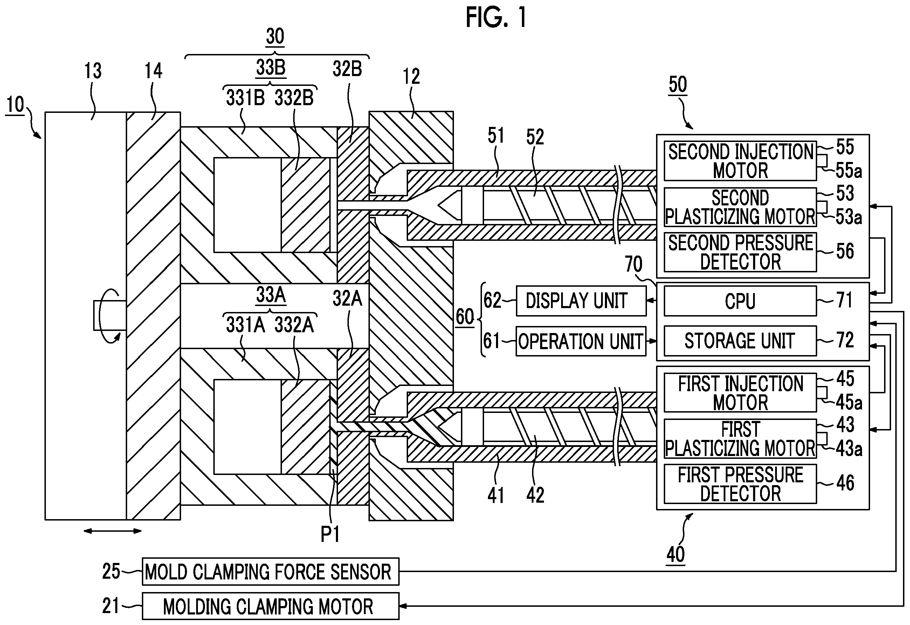

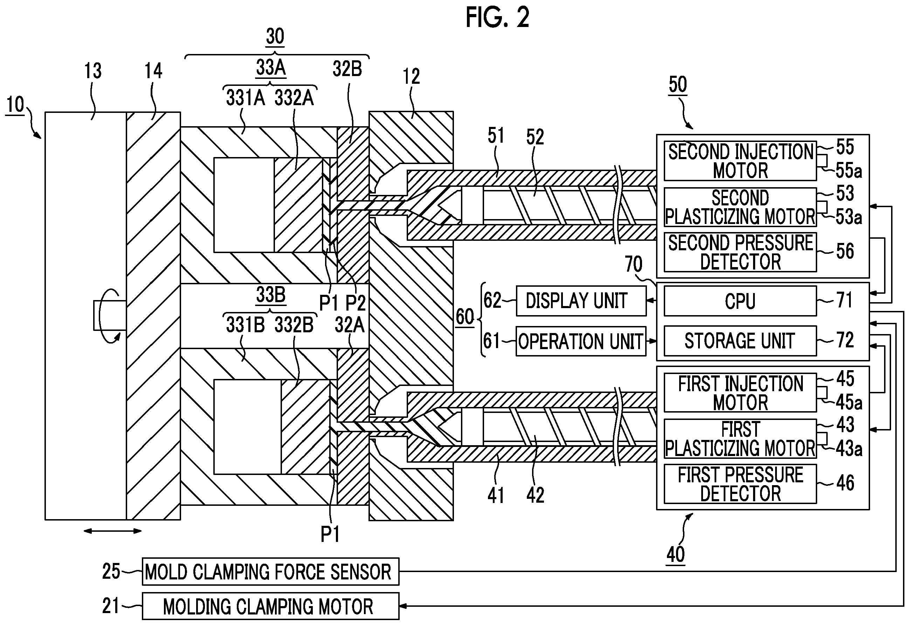

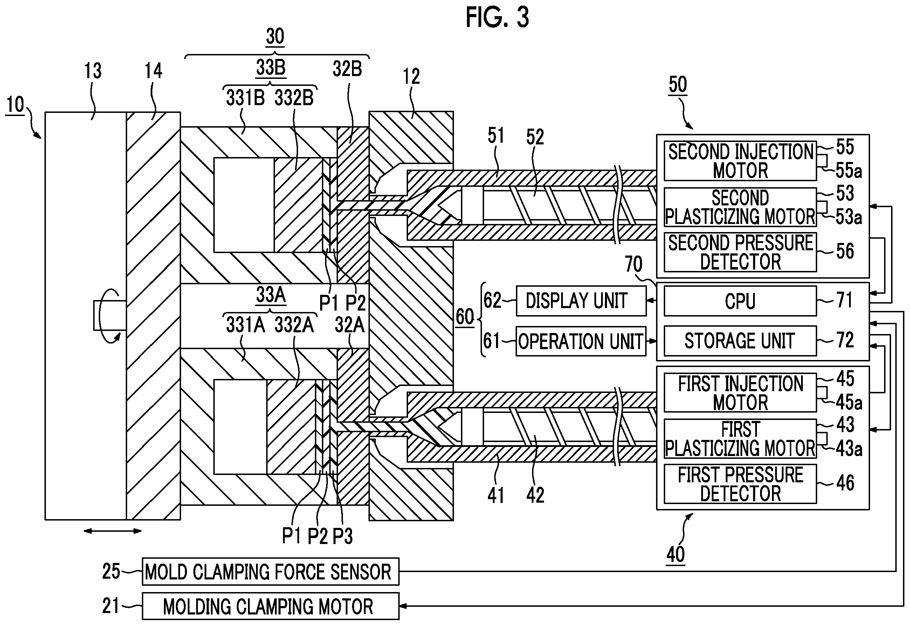

Fig. 1 is a view illustrating primary molding using a first movable mold attached to an injection molding machine according to an embodiment of the invention. Fig. 2 is a view illustrating secondary molding using the first movable mold attached to the injection molding machine according to the embodiment of the invention. Fig. 2 is also a view illustrating the primary molding using a second movable mold. Fig. 3 is a view illustrating third molding using the first movable mold attached to the injection molding machine according to the embodiment of the invention. Fig. 3 is also a view illustrating the secondary molding using the second movable mold.

The injection molding machine integrates a plurality of parts while molding these parts in order, thereby molding a molding product. The injection molding machine has a mold clamping unit 10, a first injection unit 40, a second injection unit 50, a touch panel 60, and a control unit 70.

The mold clamping unit 10 performs mold closing, mold clamping, and mold opening of a mold unit 30. The mold unit 30 is constituted of a first stationary mold 32A, a second stationary mold 32B, a first movable mold 33A, a second movable mold 33B, and the like.

The first movable mold 33A is constituted of a first movable mold body 331A, and a first sliding core 332A. The first sliding core 332A is housed within the first movable mold body 331A so as to be movable forward and backward, and is moved to a position according to a part.

The second movable mold 33B is constituted of a second movable mold body 331B, and a second sliding core 332B. The second sliding core 332B is housed within the second movable mold body 331B so as to be movable forward and backward, and is moved to a position according to a part.

The mold clamping unit 10 has a stationary platen 12, a movable platen 13, a rotary table 14, a mold clamping motor 21, and a clamping force sensor 25. In the description of the mold clamping unit 10, a description will be made with a movement direction (rightward direction in FIG. 1) of a movable platen 13 during mold closing being the front and a movement direction (leftward direction in FIG. 1) of the movable platen 13 during mold opening being the rear.

The stationary platen 12 is fixed to a frame. The first stationary mold 32A and the second stationary mold 32B are attached to the surface of the stationary platen 12 that faces the movable platen 13. In addition, in Fig. 1, the first stationary mold 32A and the second stationary mold 32B are separately formed, but may be integrally formed.

The movable platen 13 is made movable along a guide laid on the frame, and is made movable forward and backward with respect to the stationary platen 12. The first movable mold 33A and the second movable mold 33B are attached to the surface of the movable platen 13 that faces the stationary platen 12 via the rotary table 14 or the like. In addition, in Fig. 1, the first movable mold 33A and the second movable mold 33B are separately formed, but may be integrally formed.

If the rotary tables 14 rotate by 180°, the combination of a stationary mold and a movable mold that face each other varies. For example, in Figs. 1 and 3, the first stationary mold 32A and the first movable mold 33A face each other, and the second stationary mold 32B and the second movable mold 33B face each other. Additionally, in Fig. 2, the first stationary mold 32A and the second movable mold 33B face each other, and the second stationary mold 32B and the first movable mold 33A face each other.

The mold clamping motor 21 moves the movable platen 13 forward and backward with respect to the stationary platen 12, thereby performing the mold closing, the mold clamping, and the mold opening of the mold unit 30. A motion conversion mechanism, which converts the rotational motion of the mold clamping motor 21 into a linear motion to transmit the converted linear motion to the movable platen 13, is provided between the mold clamping motor 21 and the movable platen 13. The motion conversion mechanism is constituted of, for example, a ball screw mechanism.

The operation of the mold clamping unit 10 is controlled by the control unit 70. The control unit 70 controls a mold closing process, a mold clamping process, a mold opening process, and the like.

In the mold closing process, the mold closing is performed by driving the mold clamping motor 21 to move the movable platen 13 forward.

In the mold clamping process, a clamping force is generated by further driving the mold clamping motor 21 after the completion of the mold closing. The clamping force is detected by a clamping force sensor 25. The mold clamping motor 21 is driven so that the clamping force reaches a set value.

During the mold clamping process, a first filling process, a second filling process, a first hold pressure process, a second hold pressure process, a first cooling process, a second cooling process, and the like to be described below are performed.

In the mold opening process, the mold opening is performed by driving the mold clamping motor 21 to move the movable platen 13 backward.

The first injection unit 40 has a first cylinder 41, a first screw 42, a first plasticizing motor 43, a first injection motor 45, and a first pressure detector 46. In the description of the first injection unit 40, unlike the description of the mold clamping unit 10, a description will be made with a movement direction (leftward direction in FIG. 1) of the first screw 42 during filling being the front, and a movement direction (rightward direction of FIG. 1) of the first screw 42 during plasticizing being the rear.

The first cylinder 41 has a supply port, to which a first molding material is supplied, at a rear part thereof. A heating source, such as a heater, is provided at the outer periphery of the first cylinder 41.

The first screw 42 feeds the first molding material into the first cylinder 41. The first screw 42 is disposed within the first cylinder 41 so as to be rotatable and movable forward and backward.

The first plasticizing motor 43 rotates the first screw 42, thereby feeding the first molding material forward along a spiral groove of the first screw 42. The first molding material is gradually melted by the heat from the first cylinder 41 while being fed forward. When the liquid first molding material is fed to the front of the first screw 42 and accumulated at a front part of the first cylinder 41, the first screw 42 is moved backward.

The first injection motor 45 moves the first screw 42 forward and backward, thereby filling a cavity space of the mold unit 30 with the liquid first molding material accumulated in front of the first screw 42. Thereafter, the first injection motor 45 pushes the first screw 42 forward, and applies pressure to the first molding material within the cavity space. An insufficient first molding material can be replenished. A motion conversion mechanism that converts the rotational motion of the first injection motor 45 into a linear motion of the first screw 42 is provided between the first injection motor 45 and the first screw 42.

The first pressure detector 46 is disposed, for example, between the first injection motor 45 and the first screw 42, and detects a pressure acting on the first pressure detector 46. This pressure shows the back pressure of the first screw 42 or the pressure of the first molding material that the first screw 42 pushes. The first pressure detector 46 outputs a signal indicating the pressure acting on the first pressure detector 46 to the control unit 70.

The operation of the first injection unit 40 is controlled by the control unit 70. The control unit 70 controls a first filling process, a first hold pressure process, a first plasticizing process, and the like.

In the first filling process, the first injection motor 45 is driven to move the first screw 42 forward, and the inside of the mold unit 30 is filled with the liquid first molding material accumulated in front of the first screw 42. The set value of the forward movement speed of the first screw 42 may be constant, or may be changed according to a screw position or an elapsed time. The number of rotations of the first screw 42 is detected, for example, by an encoder 45a of the first injection motor 45. If the first screw 42 moves forward to a predetermined position (so-called V/P switchover position), the first hold pressure process is started. In addition, if the elapsed time from the start of the first filling process reaches a predetermined time, the first hold pressure process may be started.

In the first hold pressure process, the first injection motor 45 is driven to push the first screw 42 forward, and pressure is applied to the first molding material within the mold unit 30. An insufficient first molding material can be replenished. The set value of the pressure of the first molding material may be constant, or may be gradually changed according to the elapsed time or the like. The pressure of the first molding material is detected, for example, by the first pressure detector 46. A first cooling process is started after the first hold pressure process. The first plasticizing process may be performed during the first cooling process.

In the first plasticizing process, the first plasticizing motor 43 is driven to rotate the first screw 42, and the first molding material is fed forward along the spiral groove of the first screw 42. The first molding material is gradually melted with this feeding. When the liquid first molding material is fed to the front of the first screw 42 and accumulated at the front part of the first cylinder 41, the first screw 42 is moved backward. The set value of the number of rotations of the first screw 42 may be constant, or may be changed according to a screw position or an elapsed time. The number of rotations of the first screw 42 is detected, for example, by an encoder 43a of the first plasticizing motor 43.

In the first plasticizing process, in order to limit a sudden backward movement of the first screw 42, the first injection motor 45 is driven to apply back pressure to the first screw 42. The first injection motor 45 is driven so that the back pressure reaches a set value. If the first screw 42 moves backward to a predetermined position and a predetermined amount of the first molding material is accumulated in front of the first screw 42, the first plasticizing process is completed.

The second injection unit 50 has a second cylinder 51, a second screw 52, a secondplasticizingmotor 53, a second injection motor 55, and a second pressure detector 56. In the description of the second injection unit 50, unlike the description of the mold clamping unit 10, a description will be made with a movement direction (leftward direction in FIG. 1) of the second screw 52 during filling being the front, and a movement direction (rightward direction of FIG. 1) of the second screw 52 during plasticizing being the rear.

The second cylinder 51 has a supply port, to which a second molding material is supplied, at a rear part thereof. A heating source, such as a heater, is provided at the outer periphery of the second cylinder 51. Although the second molding material is different from the first molding material, these molding materials may be the same.

The second screw 52 feeds the second molding material into the second cylinder 51. The second screw 52 is disposed within the second cylinder 51 so as to be rotatable and movable forward and backward.

The second plasticizing motor 53 rotates the second screw 52, thereby feeding the second molding material forward along a spiral groove of the second screw 52. The second molding material is gradually melted by the heat from the second cylinder 51 while being fed forward. When the liquid second molding material is fed to the front of the second screw 52 and accumulated at the front part of the second cylinder 51, the second screw 52 is moved backward.

The second injection motor 55 moves the second screw 52 forward and backward, thereby filling a cavity space of the mold unit 30 with the liquid second molding material accumulated in front of the second screw 52. Thereafter, the second injection motor 55 pushes the second screw 52 forward, and applies pressure to the second molding material within the cavity space. An insufficient second molding material can be replenished. A motion conversion mechanism that converts the rotational motion of the second injection motor 55 into a linear motion of the second screw 52 is provided between the second injection motor 55 and the second screw 52.

The second pressure detector 56 is disposed, for example, between the second injection motor 55 and the second screw 52, and detects pressure acting on the second pressure detector 56. This pressure shows the back pressure of the second screw 52 or the pressure of the second molding material that the second screw 52 pushes. The second pressure detector 56 outputs a signal indicating the pressure acting on the second pressure detector 56 to the control unit 70.

The operation of the second injection unit 50 is controlled by the control unit 70. The control unit 70 controls a second filling process, a second hold pressure process, a second plasticizing process, and the like.

In the second filling process, the second injection motor 55 is driven to move the second screw 52 forward, and the inside of the mold unit 30 is filled with the liquid, second molding material accumulated in front of the second screw 52. The set value of the forward movement speed of the second screw 52 may be constant, or may be changed according to a screw position or an elapsed time. The number of rotations of the second screw 52 is detected, for example, by an encoder 55a of the second injection motor 55. If the second screw 52 moves forward to a predetermined position (so-called V/P switchover position), the second hold pressure process is started. In addition, if the elapsed time from the start of the second filling process reaches a predetermined time, the second hold pressure process may be started.

In the second hold pressure process, the second injection motor 55 is driven to push the second screw 52 forward, and pressure is applied to the second molding material within the mold unit 30. An insufficient second molding material can be replenished. The set value of the pressure of the second molding material may be constant, or may be gradually changed according to the elapsed time or the like. The pressure of the second molding material is detected, for example, by the second pressure detector 56. A second cooling process is started after the second hold pressure process. The second plasticizing process may be performed during the second cooling process.

In the second plasticizing process, the second plasticizing motor 53 is driven to rotate the second screw 52, and the second molding material is fed forward along the spiral groove of the second screw 52. The second molding material is gradually melted with this feeding. When the liquid second molding material is fed to the front of the second screw 52 and accumulated at the front part of the second cylinder 51, the second screw 52 is moved backward. The set value of the number of rotations of the second screw 52 may be constant, or may be changed according to a screw position or an elapsed time. The number of rotations of the second screw 52 is detected, for example, by an encoder 53a of the second plasticizing motor 53.

In the second plasticizing process, in order to limit a sudden backward movement of the second screw 52, the second injection motor 55 is driven to apply back pressure to the second screw 52. The second injection motor 55 is driven so that the back pressure reaches a set value. If the second screw 52 moves backward to a predetermined position and a predetermined amount of the second molding material is accumulated in front of the second screw 52, the second plasticizing process is completed.

The touch panel 60 has an operation unit 61 and a display unit 62. The operation unit 61 receives an operator's input operation, and outputs an operation signal according to the operator's input operation to the control unit 70. The display unit 62 displays a setting screen according to the input operation of the operation unit 61 under control using the control unit 70. A plurality of the setting screens are prepared according to purpose, and are switched and displayed. The operator operates the operation unit 61 while viewing the setting screen displayed by the display unit 62, thereby performing setting of the mold clamping unit 10, the first injection unit 40, the second injection unit 50, and the like.

In addition, in the present embodiment, although the operation unit 61 and the display unit 62 are integrated, these units may be separately provided. Additionally, a plurality of the operation units 61 may be provided.

The control unit 70 has a central processing unit (CPU) 71, and a storage unit 72. The control unit 70 makes the CPU 71 execute a program stored in the storage unit 72, thereby controlling the mold clamping unit 10 and the injection unit 40.

Next, the operation of integrating a plurality of parts while molding the plurality of parts in order, thereby molding a molding product, will be described referring back to Figs. 1 to 3.

For example, in Figs. 1 and 3, mold closing and mold clamping are performed in a state where the first stationary mold 32A and the first movable mold 33A face each other, and the second stationary mold 32B and the second movable mold 33B face each other. As illustrated in Fig. 1, the first molding material is supplied to a cavity space formed by the first stationary mold 32A and the first movable mold 33A in a mold clamped state from the first injection unit 40, and a primary part P1 is obtained. After the molding of the primary part P1, mold opening is performed, the rotary table 14 rotates by 180°, the first stationary mold 32A and the second movable mold 33B face each other, and the second stationary mold 32B and the first movable mold 33A face each other. Mold closing and mold clamping are again performed in this state.

Next, as illustrated in Fig. 2, the second molding material is supplied to a cavity space formed by the second stationary mold 32B and the first movable mold 33A in the mold clamped state from the second injection unit 50, and a secondary part P2 is obtained. The secondary part P2 is integrated with the primary part P1. Simultaneously, as illustrated in Fig. 2, the first molding material is supplied to a cavity space formed by the first stationary mold 32A and the second movable mold 33B in the mold clamped state from the first injection unit 40, and the primary part P1 is obtained. Thereafter, mold opening is performed, the rotary table 14 rotates by 180°, the first stationary mold 32A and the first movable mold 33A face each other, and the second stationary mold 32B and the second movable mold 33B face each other. Mold closing and mold clamping are again performed in this state.

Next, as illustrated in Fig. 3, the first molding material is supplied to the cavity space formed by the first stationary mold 32A and the first movable mold 33A in the mold clamped state from the first injection unit 40, and a third part P3 is obtained. The third part P3 is integrated with the secondary part P2 and the primary part P1. Simultaneously, as illustrated in Fig. 3, the second molding material is supplied to a cavity space formed by the second stationary mold 32B and the second movable mold 33B in the mold clamped state from the second injection unit 50, and the secondary part P2 is obtained. The secondary part P2 is integrated with the primary part P1. Thereafter, mold opening is performed, the rotary tables 14 rotate by 180°, the first stationary mold 32A and the second movable mold 33B face each other, and the second stationary mold 32B and the first movable mold 33A face each other. Mold closing and mold clamping are again performed in this state.

In this way, the plurality of parts are molded in order by sequentially changing the combinations of the movable molds and the stationary molds that form the cavity spaces, and the injection units that fill the cavity spaces with the molding materials. After the molding of all the parts is completed, a molding product is pushed out from the mold unit 30. In addition, although the first molding material and the second molding material are made of different materials in the present embodiment, the same material may be used.

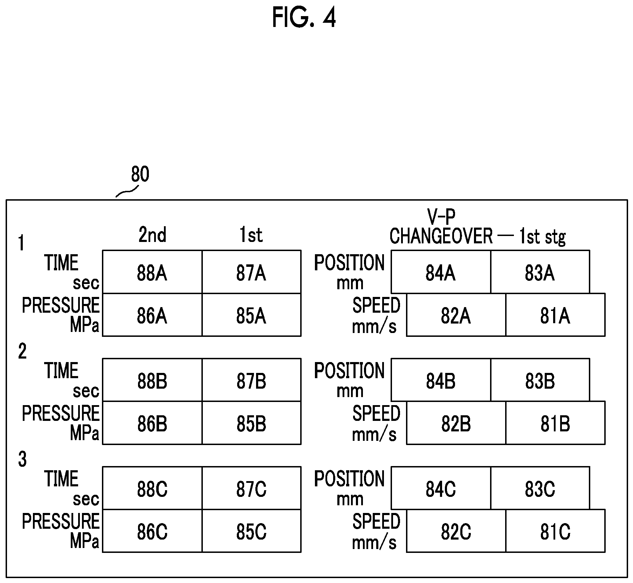

FIG. 4 is a view illustrating a setting screen of the first injection molding machine according to the embodiment of the invention. The first injection unit 40 repeatedly performs the first filling process and the like, and sequentially performs the primary molding, the third molding, and the like, thereby molding a molding product. The primary molding corresponds to the first-time first filling process and the like, and the third molding corresponds to the second-time first filling process and the like.

The setting screen 80 includes a plurality of setting columns . The setting columns are provided for every part molded by the first injection unit 40.

The setting screen 80 has setting columns 81A to 88A of a first-time (primary molding) first filling process, setting columns 81B to 88B of a second-time (third molding) first filling process, setting columns 81C to 88C of a third-time (fifth-time molding) first filling process, and the like. The setting screen 80 may have setting columns after fourth or subsequent times, or may not have the third-time setting columns. Hereinafter, when there is no need for distinction of parts, "A", "B", and "C" included in the symbols of the setting columns are omitted.

Set values in the first filling process are input to the setting columns 81 to 84. The initial speeds of the first screw 42 are input to the setting columns 81. The end speeds of the first screw 42 are input to the setting columns 82. The speed switchover positions of the initial speeds and the end speeds are input to the setting columns 83. V/P switchover positions are input to the setting columns 84. In addition, in each first filling process, switchover of the speed of the first screw 42 may be performed a plurality of times, or may not be performed at all.

Set values in the first hold pressure process are input to the setting columns 85 to 88. The initial pressures of the first molding material are input to the setting columns 85. The end pressures of the first molding material are input to the setting columns 86. Holding times in the initial pressures are input to the setting columns 87. Holding times in the end pressures are input to the setting columns 88. In addition, in each first filling process, switchover of the pressure of the first molding material may be performed a plurality of times, or may not be performed at all.

The control unit 70 displays a set value, which is input to a setting column (for example, the setting column 81A) for molding one part among the setting screens 80 of the first injection unit 40, on a setting column (for example, the setting column 81B or 81C) for molding a remaining predetermined part. Since a set value to actually be used can be input referring to the displayed set value, erroneous input can be suppressed, and input time can be shortened. Additionally, when the displayed set value and the set value to actually be used are the same, re-input is unnecessary, and input time can be shortened. Hence, the input operability of the setting screen 80 can be improved.

Meanwhile, an operator often inputs set values for molding respective parts according to the order in which the parts are molded. Therefore, the setting column that displays the input set value may include at least one setting column for molding the following parts, or may include at least a setting column for molding the next part. For example, a setting column that displays a set value input for primary molding may include at least a setting column for third molding.

In addition, the operator may input the set values for molding respective parts in reverse order to the order in which the parts are molded. For example, the operator may determine a set value for molding the last part, and may determine a set value for molding the previous part. Therefore, the setting column that displays the input set value may also include at least one setting column for molding a part before the last part, or may also include at least a setting column for molding a part one before the last part.

The control unit 70 may select whether or not the set value input to the setting column (for example, the setting column 81A) for molding one part is displayed on the setting column (for example, the setting column 81B or 81C) for molding another part according to an operation situation of a predetermined input operation (for example, the presence/absence of the operation or the type of the operation) in the operation unit 61.

For example, when the set value is input to the setting column (for example, the setting column 81A) for molding one part, the control unit 70 popup-displays a screen for selecting whether or not the input set value is displayed on the setting column (for example, the setting column 81B or 81C) for molding another part on the display unit 62. According to an operator's operation situation who has viewed a popup-displayed screen, the control unit 70 selects whether or not the set value input to the setting column for molding one part is displayed on the setting column for molding another part.

Otherwise, when the set value is input to the setting column (for example, the setting column 81A) for molding one part, the control unit 70 confirms an operation situation of a selection button for selecting whether or not the input set value is displayed on the setting column (for example, the setting column 81B or 81C) for molding another part. This selection button is provided on the setting screen 80 in advance together with the plurality of setting columns. According to a selection situation of the selection button, the control unit 70 selects whether or not the set value input to the setting column for molding one part is displayed on the setting column for molding another part.

In addition, when the set value is input to the setting column (for example, the setting column 81A) for molding one part, the control unit 70 may select whether or not the input set value is displayed on the setting column (for example, the setting column 81B or 81C) for molding another part, according to information stored in advance in the storage unit 72.

As described above, the control unit 70 may display the set value, which is input to the setting column for molding one part using the first injection unit 40, on the setting column for molding the remaining predetermined part using the first injection unit 40. The setting column that displays the input set value may include at least one setting column for molding the following parts, or may include at least a setting column for molding the next part. For example, a setting column that displays a set value input for primary molding may include at least a setting column for third molding. The control unit 70 may select whether or not the set value, which is input to the setting column for molding one part using the first injection unit 40 is displayed, on the setting column for molding the remaining predetermined part using the first injection unit 40, according to an operation situation of a predetermined input operation to the operation unit 61.

Although the setting screen 80 illustrated in Fig. 4 is for the first injection unit 40, a setting screen of the second injection unit 50 is similarly created. The setting screen of the second injection unit 50 includes a setting column regarding the second filling process, a setting column regarding the second hold pressure process, and the like. The setting screen of the second injection unit 50 includes setting columns of a first-time (secondary molding) second filling process, setting columns of a second-time (fourth molding) second filling process, setting columns of a third-time (sixth molding) second filling process, and the like.

The control unit 70 may display a set value, which is input to a setting column for molding one part using the second injection unit 50, on a setting column for molding a remaining predetermined part using the second injection unit 50. The setting column that displays the input set value may include at least one setting column for molding the following parts, or may include at least a setting column for molding the next part. For example, a setting column that displays a set value input for secondary molding may include at least a setting column for fourth molding. The control unit 70 may select whether or not the set value, which is input to the setting column for molding one part using the second injection unit 50 is displayed, on the setting column for molding the remaining predetermined part using the second injection unit 50, according to an operation situation of a predetermined input operation to the operation unit 61.

The control unit 70 may simultaneously display the setting columns for the first injection unit 40 and the setting columns for the second injection unit 50 on one setting screen, or may switch and display the setting columns.

The control unit 70 may display the set value, which is input to the setting column for molding one part using the first injection unit 40, on setting columns for molding predetermined parts using the second injection unit 50. The setting column that displays the input set value may include at least one setting column for molding the following parts, or may include at least a setting column for molding the next part. For example, a setting column that displays a set value input for primary molding may include at least a setting column for secondary molding. The control unit 70 may select whether or not the set value, which is input to the setting column for molding one part using the first injection unit 40 is displayed, on the setting column for molding a predetermined part using the second injection unit 50, according to an operation situation of a predetermined input operation to the operation unit 61.

Similarly, the control unit 70 may display the set value, which is input to the setting column for molding one part using the second injection unit 50, on the setting column for molding a predetermined part using the first injection unit 40. The setting column that displays the input set value may include at least one setting column for molding the following parts, or may include at least a setting column for molding the next part. For example, a setting column that displays a set value input for secondary molding may include at least a setting column for third molding. The control unit 70 may select whether or not the set value, which is input to the setting column for molding one part using the second injection unit 50 is displayed, on the setting column for molding a predetermined part using the first injection unit 40, according to an operation situation of a predetermined input operation to the operation unit 61.

Additionally, as described above, although the setting screen 80 illustrated in Fig. 4 is for the first injection unit 40, a setting screen of the mold clamping unit 10 is similarly created. The setting screen of the mold clamping unit 10 includes setting columns regarding the mold clamping process, or the like. The setting screen of the mold clamping unit 10 includes setting columns of a first-time mold clamping process, setting columns of a second-time mold clamping process, setting columns of a third-time mold clamping process, and the like.

The control unit 70 displays a set value, which is input to a setting column of one mold clamping process among setting screens for the mold clamping unit 10, on a setting column of a remaining predetermined mold clamping process. The setting column that displays the input set value may include at least one setting column of a mold clamping process performed afterward, or may include at least a setting column of a mold clamping process performed subsequently. The control unit 70 may select whether the set value, which is input to the setting column of the one mold clamping process among the setting screens for mold clamping unit 10, is displayed on the setting column of the remaining predetermined mold clamping process, according to an operation situation of a predetermined input operation to the operation unit 61.

Although the embodiment of the injection molding machine has been described above, the invention is not limited to the above-described embodiment, and various alterations and improvements can be made within the scope of the invention described in the claims.

For example, although the mold clamping unit 10 of the above embodiment has the mold clamping motor 21 as a driving source, the mold clamping unit may have a hydraulic cylinder instead of the mold clamping motor 21. Additionally, the mold clamping unit 10 may have a linear motor for mold opening and closing, and may have an electromagnet for mold clamping.

Additionally, although the mold clamping unit 10 of the above embodiment is a horizontal type in which the mold opening/closing direction is the horizontal direction and the rotary table 14 is rotatably supported by the movable platen 13, the invention is not limited to this. For example, the mold clamping unit may be a vertical type in which the mold opening/closing direction is the vertical direction, and the rotary table may be rotatably supported by the stationary platen.

Additionally, the shape of the cavity space, the method of stacking parts, the core of the mold unit, and the like may be various, and are not particularly limited.

## Claims

1. An injection molding machine that integrates a plurality of parts (P1, P2, P3) while molding the plurality of parts in order, thereby molding a molding product, the injection molding machine comprising:
an operation unit (61) that is configured to receive an input operation;
a display unit (62) that is configured to display a setting screen (80) for molding conditions; and
a control unit (70) that is configured to control the molding process and to make the display unit (62) display the setting screen according to the input operation of the operation unit (61),
wherein the setting screen includes setting columns (81 to 88) to which set values used for molding respective parts (P1, P3) are input,
**characterized in that**
the control unit (70) is configured to make a set value input to a setting column (81A) for molding one part (P1) be a set value input to and displayed on a setting column (81B, 81C) for molding a remaining predetermined part which is a following predeterminedpart (P3).

2. The injection molding machine according to Claim 1,
wherein the control unit (70) is configured to select whether or not the set value input to the setting column for molding one part is displayed on a setting column for molding another part, according to an operation situation of a predetermined input operation to the operation unit (61).

3. The injection molding machine according to any one of Claims 1 to 2, further comprising:
a plurality of injection unit sections (40, 50) that fill cavity spaces with molding materials,
wherein the plurality of parts can be molded in order by sequentially changing combinations of movable molds (33A, 33B) and stationary molds (32A, 32B) that form the cavity spaces, and the injection unit sections (40, 50) that fill the cavity spaces with the molding materials.

4. The injection molding machine according to Claim 3,
wherein the control unit (70) is configured to make a set value input to a setting column for molding one part using one injection unit section be a set value to and displayed on a setting column for molding a remaining predetermined part.

5. The injection molding machine according to Claim 3 or 4,
wherein the control unit (70) is configured to make the set value input to the setting column for molding one part using the one injection unit section be a set value to and displayed on a setting column for molding a remaining predetermined part using the one injection unit section.

6. The injection molding machine according to any one of Claims 3 to 5,
wherein the control unit (70) is configured to make the set value input to the setting column for molding one part using the one injection unit section be a set value to and displayed on a setting column for molding a predetermined part using another injection unit section.

## Patentansprüche

1. Spritzgießmaschine, die mehrere Teile (P1, P2, P3) integriert, während sie die mehreren Teile der Reihe nach formt, wodurch ein Formungserzeugnis geformt wird, wobei die Spritzgießmaschine Folgendes umfasst:
eine Operationseinheit (61), die dafür konfiguriert ist, eine Eingabeoperation zu empfangen,
eine Anzeigeeinheit (62), die dafür konfiguriert ist, einen Einstellbildschirm (80) für Formungsbedingungen anzuzeigen, und
eine Steuereinheit (70), die dafür konfiguriert ist, den Formungsvorgang zu steuern und zu veranlassen, dass die Anzeigeeinheit (62) den Einstellbildschirm entsprechend der Eingabeoperation der Operationseinheit (61) anzeigt,
wobei der Einstellbildschirm Einstellspalten (81 bis 88) umfasst, in die Sollwerte eingegeben werden, die zum Formen jeweiliger Teile (P1, P3) verwendet werden, **dadurch gekennzeichnet, dass**
die Steuereinheit (70) dafür konfiguriert ist, zu veranlassen, dass ein Sollwert, der in eine Einstellspalte (81A) zum Formen eines Teils (P1) eingegeben wird, ein Sollwert ist, der in eine Einstellspalte (81B, 81C) zum Formen eines verbleibenden vorbestimmten Teils, das ein darauf folgendes vorbestimmtes Teil (P3) ist, eingegeben und auf derselben angezeigt wird.

2. Spritzgießmaschine nach Anspruch 1,
wobei die Steuereinheit (70) dafür konfiguriert ist, auszuwählen, ob der Sollwert, der in die Einstellspalte zum Formen eines Teils eingegeben wird, auf einer Einstellspalte zum Formen eines anderen Teils angezeigt wird oder nicht, entsprechend einer Operationssituation einer vorbestimmten Eingabeoperation an die Operationseinheit (61).

3. Spritzgießmaschine nach einem der Ansprüche 1 bis 2, die ferner Folgendes umfasst:
mehrere Einspritzeinheitssektionen (40, 50), die Hohlräume mit Formmassen füllen,
wobei die mehreren Teile der Reihe nach geformt werden können durch aufeinanderfolgendes Wechseln von Kombinationen von beweglichen Formen (33A, 33B) und unbeweglichen Formen (32A, 32B), welche die Hohlräume bilden, und der Einspritzeinheitssektionen (40, 50), welche die Hohlräume mit dem Formmassen füllen.

4. Spritzgießmaschine nach Anspruch 3,
wobei die Steuereinheit (70) dafür konfiguriert ist, zu veranlassen, dass ein Sollwert, der in eine Einstellspalte zum Formen eines Teils unter Verwendung einer Einspritzeinheitssektion eingegeben wird, ein Sollwert für eine Einstellspalte zum Formen eines verbleibenden vorbestimmten Teils ist und auf derselben angezeigt wird.

5. Spritzgießmaschine nach Anspruch 3 oder 4,
wobei die Steuereinheit (70) dafür konfiguriert ist, zu veranlassen, dass der Sollwert, der in die Einstellspalte zum Formen eines Teils unter Verwendung der einen Einspritzeinheitssektion eingegeben wird, ein Sollwert für eine Einstellspalte zum Formen eines verbleibenden vorbestimmten Teils unter Verwendung der einen Einspritzeinheitssektion ist und auf derselben angezeigt wird.

6. Spritzgießmaschine nach einem der Ansprüche 3 bis 5 wobei die Steuereinheit (70) dafür konfiguriert ist, zu veranlassen, dass der Sollwert, der in die Einstellspalte zum Formen eines Teils unter Verwendung der einen Einspritzeinheitssektion eingegeben wird, ein Sollwert für eine Einstellspalte zum Formen eines verbleibenden vorbestimmten Teils unter Verwendung einer anderen Einspritzeinheitssektion ist und auf derselben angezeigt wird.

## Revendications

1. Machine de moulage par injection qui intègre une pluralité de pièces (P1, P2, P3) tout en moulant la pluralité de pièce dans l'ordre, moulant ainsi un produit de moulage, la machine de moulage par injection comprenant :
une unité de fonctionnement (61) qui est configurée pour recevoir une opération d'entrée ;
une unité d'affichage (62) qui est configurée pour afficher un écran de réglage (80) pour les conditions de moulage ; et
une unité de commande (70) qui est configurée pour commander le processus de moulage et pour permettre que l'unité d'affichage (62) affiche l'écran de réglage selon l'opération d'entrée de l'unité de fonctionnement (61),
dans lequel l'écran de réglage comprend des colonnes de réglage (81 à 88) dans lesquelles des valeurs de consigne utilisées pour mouler des pièces (P1, P3) respectives sont entrées,
**caractérisée en ce que** :
l'unité de commande (70) est configurée pour qu'une valeur de consigne entrée dans une colonne de réglage (81A) pour mouler une pièce (P1) soit une valeur de consigne entrée dans et affichée sur une colonne de réglage (81B, 81C) pour mouler une pièce prédéterminée résiduelle qui est une pièce prédéterminée suivante (P3).

2. Machine de moulage par injection selon la revendication 1,
dans laquelle l'unité de commande (70) est configurée pour sélectionner si la valeur de consigne entrée dans la colonne de réglage pour mouler une pièce est affichée ou pas sur une colonne de réglage pour mouler une autre pièce, selon une situation d'opération d'une opération d'entrée prédéterminée dans l'unité de fonctionnement (61).

3. Machine de moulage par injection selon l'une quelconque des revendications 1 à 2, comprenant en outre
une pluralité de sections d'unité d'injection (40, 50) qui remplissent des espaces de cavité avec les matériaux de moulage,
dans laquelle la pluralité de pièces peuvent être moulées dans l'ordre en changeant séquentiellement les combinaisons de moules mobiles (33A, 33B) et de moules fixes (32A, 32B) qui forment les espaces de cavité, et les sections d'unité d'injection (40, 50) qui remplissent les espaces de cavité avec les matériaux de moulage.

4. Machine de moulage par injection selon la revendication 3,
dans laquelle l'unité de commande (70) est configurée pour qu'une valeur de consigne entrée dans une colonne de réglage pour mouler une pièce en utilisant une section d'unité d'injection, soit une valeur de consigne sur et affichée sur une colonne de réglage pour mouler une pièce prédéterminée résiduelle.

5. Machine de moulage par injection selon la revendication 3 ou 4,
dans laquelle l'unité de commande (70) est configurée pour que la valeur de consigne entrée dans la colonne de réglage pour mouler une pièce en utilisant la une section d'unité d'injection, soit une valeur de consigne sur et affichée sur une colonne de réglage pour mouler une pièce prédéterminée résiduelle en utilisant la une section d'unité d'injection.

6. Machine de moulage par injection selon l'une quelconque des revendications 3 à 5,
dans laquelle l'unité de commande (70) est configurée pour que la valeur de consigne entrée dans la colonne de réglage pour mouler une pièce en utilisant la une section d'unité d'injection, soit une valeur de consigne sur et affichée sur une colonne de réglage pour mouler une pièce prédéterminée en utilisant une autre section d'unité d'injection.
